# EUROPÄISCHE PATENTSCHRIFT

(11) **EP 1 736 363 B1**
(45) Veröffentlichungstag und Bekanntmachung des Hinweises auf die Patenterteilung: **19.03.2008**
(21) Anmeldenummer: 05013479.0
(22) Anmeldetag: 22.06.2005
(51) Int. Cl.: B60R 11/02

(54) **Montageanordnung zur Montage eines Einbaugerätes in einem Kraftfahrzeug**
Mounting structure for a built-in apparatus in a vehicle
Structure de montage pour un appareil encastré dans un véhicule

(43) Veröffentlichungstag der Anmeldung: 27.12.2006
(73) Patentinhaber: Delphi Technologies, Inc., Troy, MI 48007 (US)
(72) Erfinder: Senftleben, Jörg, 90425 Nürnberg (DE)
(74) Vertreter: Manitz, Finsterwald & Partner GbR

(56) Entgegenhaltungen:
- US-A1- 2003 146 350
- PATENT ABSTRACTS OF JAPAN Bd. 2002, Nr. 12, 12. Dezember 2002 (2002-12-12) & JP 2002 220003 A (FUJITSU TEN LTD; NIFCO INC), 6. August 2002 (2002-08-06)
- PATENT ABSTRACTS OF JAPAN Bd. 1999, Nr. 01, 29. Januar 1999 (1999-01-29) & JP 10 272993 A (MAZDA MOTOR CORP), 13. Oktober 1998 (1998-10-13)
- PATENT ABSTRACTS OF JAPAN Bd. 1999, Nr. 04, 30. April 1999 (1999-04-30) & JP 11 005495 A (MAZDA MOTOR CORP), 12. Januar 1999 (1999-01-12)
- PATENT ABSTRACTS OF JAPAN Bd. 013, Nr. 174 (C-589), 25. April 1989 (1989-04-25) & JP 01 005496 A (TORAY IND INC), 10. Januar 1989 (1989-01-10)

## Beschreibung

Die vorliegende Erfindung betrifft eine Montageanordnung zur Montage eines Einbaugerätes in einem Kraftfahrzeug und ein dazugehöriges Montageverfahren. Das Einbaugerät besitzt ein Laufwerk für einen Datenträger wie beispielsweise eine CD oder eine DVD und ist, wenn es in dem Kraftfahrzeug montiert ist, von einer Frontverkleidung verdeckt, die einen Schlitz zum Einführen eines Datenträgers in das Laufwerk aufweist.

Eine solche Montageanordnung und ein dazugehöriges Montageverfahren sind in Dokument JP-A-2002 220003 offenbart.

Bei dem Einbaugerät kann es sich beispielsweise um einen CD-Spieler oder auch um ein Navigationssystem mit einem eingebauten Laufwerk für eine CD oder DVD zum Einlesen von Landkartendaten handeln. Derartige Geräte werden üblicherweise in dem Fahrzeug in ein Armaturenbrett eingebaut. Die Frontverkleidung wird dann so angebracht, dass sie das betreffende Einbaugerät und gegebenenfalls noch weitere in dessen Nachbarschaft liegende Einbaugeräte abdeckt. Bei der Frontverkleidung kann es sich beispielsweise um ein so genanntes Multimedia Interface (MMI) handeln, welches Bedienelemente für verschiedene Geräte aufweist. Sie kann integraler Bestandteil einer Instrumententafel oder ein separates Bauteil sein. Das Laufwerk in dem Einbaugerät besitzt selbstverständlich ebenso wie die Frontverkleidung einen Schlitz zum Einführen eines Datenträgers in das Laufwerk. Diese beiden Schlitze müssen mit hoher Genauigkeit miteinander ausgerichtet werden, damit ein Datenträger problemlos eingezogen und ausgeworfen werden kann. Um die Funktionstüchtigkeit dieses Mechanismus zu gewährleisten, wird also ein eng tolerierter Sitz der Frontverkleidung in Bezug auf das Einbaugerät benötigt.

Um diesen eng tolerierten Sitz zu gewährleisten, wird bei den aus dem Stand der Technik bekannten Einbaugeräten im Allgemeinen die Frontverkleidung direkt an einem Gehäuse des Einbaugerätes befestigt. Zuvor wird das Laufwerk fest in diesem Gehäuse montiert. Diese Art der Montage hat allerdings verschiedene Nachteile und führt insbesondere zu einer Einschränkung, was die Gestaltungsmöglichkeiten für die Frontverkleidung beziehungsweise die Instrumententafel betrifft. Zudem muss zunächst das Laufwerk bezüglich des Gehäuses und dann das Gehäuse bezüglich der Frontverkleidung korrekt ausgerichtet werden, um im Ergebnis eine korrekte Ausrichtung der Frontverkleidung mit ihrem Schlitz bezüglich des Laufwerkes zu erzielen.

Es ist daher die Aufgabe der vorliegenden Erfindung, eine Montageanordnung der eingangs erwähnten Art und ein dazugehöriges Montageverfahren so zu verbessern, dass auf einfache Weise ein möglichst eng tolerierter Sitz zwischen der Frontverkleidung und einem Laufwerk für einen Datenträger gewährleistet ist, wobei die Anordnung möglichst viel Gestaltungsspielraum insbesondere für die Gestaltung der Frontverkleidung lassen soll.

Diese Aufgabe wird erfindungsgemäß durch eine Montageanordnung nach Anspruch 1 und ein dazugehöriges Verfahren nach Anspruch 11 gelöst.

Neben der eingangs erwähnten Frontverkleidung mit einem Schlitz zum Einführen eines Datenträgers in ein Laufwerk gehört zu der erfindungsgemäßen Montageanordnung ein beweglich in einem Montagegehäuse gelagerter Montagerahmen, an dem das Laufwerk des Einbaugerätes befestigbar ist. Dabei ist die Position des Montagerahmens in dem Montagegehäuse durch eine Befestigung des Montagerahmens an der Frontverkleidung fixierbar.

Bei dem erfindungsgemäßen Verfahren zur Montage eines Einbaugerätes in einem Kraftfahrzeug wird ein Montagerahmen in einem Montagegehäuse montiert, wobei der Montagerahmen beweglich an dem Montagegehäuse gelagert wird. Ein Laufwerk des Einbaugeräts wird an dem Montagerahmen fixiert. Im Anschluss an diese beiden in ihrer Reihenfolge im Prinzip vertauschbaren Schritte wird eine mit einem Schlitz zum Einführen eines Datenträgers versehene Frontverkleidung an dem Montagegehäuse montiert, wobei der Montagerahmen an der Frontverkleidung befestigt und dadurch fixiert wird.

Der beweglich an dem Montagegehäuse gelagerte Montagerahmen erlaubt es, das Laufwerk, welches an diesem Montagerahmen befestigt wird, ebenfalls beweglich in dem Montagegehäuse zu lagern. Erst durch die Befestigung des Montagerahmens an der Frontverkleidung werden der Rahmen und somit auch das Laufwerk in Bezug auf die Frontverkleidung fixiert. Im Gegensatz zu den aus dem Stand der Technik bekannten Montageanordnungen und -verfahren muss nur einmal, nämlich bei der Fixierung des Montagerahmens bei der Montage der Frontverkleidung, eine korrekte Ausrichtung mit geringer Toleranz vorgenommen werden. Die korrekte Ausrichtung des Schlitzes zum Einführen eines Datenträgers, der in der Frontverkleidung ausgebildet ist, mit dem entsprechenden Schlitz in dem Laufwerk wird also alleine durch die Fixierung des Montagerahmens an der Frontverkleidung in einem Schritt erreicht und ist dementsprechend leichter zu erzielen.

Zudem bestehen für die Frontverkleidung beziehungsweise die Instrumententafel durch den Wegfall der Fixierung der Frontverkleidung an dem Gehäuse mehr Gestaltungsmöglichkeiten.

Bevorzugte Ausführungsformen der Erfindung gehen aus den Unteransprüchen und der nun folgenden Beschreibung sowie den beigefügten Zeichnungen hervor.

Der Montagerahmen kann im Wesentlichen U-förmig sein, wobei seine offene Seite in Richtung der Frontverkleidung orientiert ist, und die Außenkontur des Montagerahmens der Innenkontur des Montagegehäuses entspricht. Eine derartige Anordnung vereinfacht die bewegliche Lagerung des Montagerahmens in dem Montagegehäuse. Durch die einander entsprechenden Konturen wird der Montagerahmen an drei Seiten des Montagegehäuses außenseitig von diesem abgestützt.

Gemäß einer bevorzugten Ausführungsform der Erfindung ist der Montagerahmen in dem Montagegehäuse an seiner in Richtung der Frontverkleidung liegenden Vorderseite so gelagert, dass er in eine Richtung quer zu der Erstreckungsrichtung des Schlitzes verschoben werden kann. Wenn beispielsweise der Schlitz zum Einführen eines Datenträgers bei in dem Fahrzeug eingebautem Einbaugerät horizontal verläuft, kann der Montagerahmen an seiner Vorderseite so gelagert sein, dass er nach oben und unten verschoben werden kann. Wenn das Laufwerk an dem Montagerahmen befestigt ist, liegt der in dem Laufwerk vorgesehene Schlitz an dieser Vorderseite, und die Lage des Schlitzes kann somit nach oben oder unten verschoben werden. Damit wird der Tatsache Rechnung getragen, dass im Allgemeinen vor allem die korrekte Ausrichtung in eine Richtung quer zur der Erstreckungsrichtung des Schlitzes problematisch ist.

Vorzugsweise ist der Montagerahmen an seiner der Vorderseite gegenüberliegenden Rückseite um eine Drehachse verschwenkbar gelagert, die parallel zu der Erstreckungsrichtung des Schlitzes verläuft. Im Fall des vorhergehenden Beispieles eines horizontal verlaufenden Schlitzes ist der Montagerahmen somit an seiner Rückseite um eine feststehende horizontale Achse verschwenkbar gelagert. Wenn der Montagerahmen um diese Drehachse an seiner Rückseite verschwenkt wird, verschiebt sich dementsprechend seine Vorderseite nach oben oder unten, so dass, wie oben bereits erwähnt, der in dem Laufwerk ausgebildete Schlitz nach oben oder unten verschoben werden kann.

Eine derartige verschwenkbare Lagerung des Montagerahmens an dem Montagegehäuse kann gemäß einer besonders vorteilhaften Ausführungsform der Erfindung mittels zweier rückwärtig an dem Montagerahmen vorgesehene Lagerausnehmungen realisiert werden, welche auf zwei korrespondierende in dem Montagegehäuse innenseitig vorspringende Lagerzapfen aufschiebbar sind. Derartige Lagerausnehmungen können beispielsweise U-förmig ausgebildet sein, wobei der Montagerahmen mit der zu seiner Rückseite orientierten offenen Seite des U jeweils auf den entsprechenden Zapfen aufgeschoben werden kann, so dass die Zapfen jeweils in der Wölbung des U zu liegen kommen. Eine auf diese Weise realisierte verschwenkbare Lagerung erlaubt eine Montage des Montagerahmens in dem Montagegehäuse mit einem Handgriff und ist zudem vergleichsweise leicht herzustellen.

Nach einer besonders bevorzugten Ausführungsform der Erfindung ist der Montagerahmen schwingungsgedämpft an dem Montagegehäuse gelagert. Damit werden Erschütterungen des Fahrzeugs nur gedämpft an das an dem Montagerahmen befestigte Laufwerk übertragen. Gerade bei CD-Laufwerken, deren Laseroptik empfindlich auf Erschütterungen reagiert, kann somit die Wiedergabequalität verbessert werden. Zudem wird die Lebensdauer des Laufwerkes und der gesamten Montageanordnung durch eine solche schwingungsgedämpfte Lagerung verlängert.

Beispielsweise kann eine Lagerung an der Vorderseite des Montagerahmens, welche ein Verschieben des Montagerahmens in eine Richtung quer zur Erstreckungsrichtung des Schlitzes erlaubt, ähnlich wie die bereits beschriebene verschwenkbare Lagerung an der Rückseite des Montagerahmens über Lagerausnehmungen und korrespondierende Zapfen erreicht werden. Die entsprechenden Lagerausnehmungen besitzen vorzugsweise eine schlitzartige langgestreckte Form und erstrecken sich in die gewünschte Verschieberichtung. Ein Dämpfungseinsatz in Form eines in die Lagerausnehmung eingesetzten, die Ausnehmung umrahmenden elastischen Kunststoffeinsatzes kann zum einen eine Schwingungsdämpfung des Laufwerkes ermöglichen, und zum anderen die Führung der Lagerzapfen in den Lagerausnehmungen verbessern.

Auch die oben bereits erwähnten, zur verschwenkbaren Lagerung des Montagerahmens an dem Montagegehäuse dienenden und rückwärtig an dem Montagerahmen vorgesehenen Lagerausnehmungen in U-Form können mit Einsätzen aus einem dämpfenden Material, beispielsweise aus Gummi oder Kunststoff, versehen werden. Gerade bei einer Lagerung, die ein Verschwenken um eine Drehachse erlaubt, können solche Einsätze nicht nur zur Dämpfung beitragen, sondern auch so gestaltet werden, dass sie eine Drehung der Lagerausnehmungen um einen darin sitzenden Zapfen erlauben, aber die Lagerausnehmungen nicht mehr in Bezug auf die Lagerzapfen verschoben werden können, wenn der Montagerahmen mit diesen Ausnehmungen auf die korrespondierenden Lagerzapfen aufgeschoben worden ist. Zu diesem Zweck können beispielsweise Gummieinsätze mit flexiblen Fingern verwendet werden, wobei diese Finger so orientiert sind, dass sie beim Aufschieben des Montagerahmens mit den Lagerausnehmungen auf die korrespondierenden Lagerzapfen beiseite gedrückt werden, und zurückschnappen, wenn die Ausnehmungen bis zum Anschlag auf die Lagerzapfen aufgeschoben sind, so dass die Zapfen in der gewünschten Position am Ende der Ausnehmungen gehalten werden.

Nach einer besonders bevorzugten Ausführungsform der Erfindung weist der Montagerahmen an seiner in Richtung der Frontverkleidung liegenden Vorderseite außenseitig über das Montagegehäuse überstehende Befestigungsbereiche auf, welche zu seiner Befestigung an der Frontverkleidung dienen. Beispielsweise können an einem insgesamt im Wesentlichen U-förmigen Montagerahmen jeweils an beiden Schenkeln des U nach außen weisende, laschenartige Befestigungsbereiche angeformt sein.

Vorteilhafterweise weisen diese Befestigungsbereiche Bohrungen zur Aufnahme eines Befestigungsmittels auf. Die außenseitige Anordnung der Befestigungsbereiche hat in diesem Fall den Vorteil, dass an der Frontverkleidung vorgesehene, vorspringende Befestigungsmittel durch die Bohrungen in den außenseitig angeordneten Befestigungsbereichen geführt werden können, ohne in das Montagegehäuse zu ragen, da sie außen an diesem vorbei geführt werden.

Die Befestigungsbereiche können aber auch mit anderen Befestigungselementen, wie beispielsweise je einem Zapfen, versehen sein.

Ähnlich wie die oben erwähnten Lagerausnehmungen können auch solche Bohrungen in den Befestigungsbereichen des Montagerahmens mit Dämpfungseinsätzen versehen sein. Beispielsweise können im Wesentlichen ringförmige Gummieinsätze in Bohrungen mit kreisförmigem Querschnitt einerseits dazu dienen, Schwingungen des Fahrzeugs zu absorbieren, so dass eine möglichst vibrationsarme Lagerung des Laufwerkes gewährleistet wird, und andererseits kann in eine solche Bohrung ein an der Frontverkleidung vorgesehener Bolzen eingepresst werden, was die Montage der Frontverkleidung erheblich vereinfacht.

Nach einer bevorzugten Ausführungsform der Erfindung weist das Montagegehäuse eine Vorderwand auf, die einerseits eine Aussparung zum Einführen eines Datenträgers in das Laufwerk und andererseits seitliche Aussparungen besitzt, wobei sich durch letztere der Montagerahmen erstreckt. Die Vorderwand ist dabei so an das Montagegehäuse montiert, dass die Ausnehmung zum Einführen eines Datenträgers mit dem Schlitz des an den Montagerahmen befestigten Laufwerkes ausgerichtet ist.
Durch die seitlichen Ausnehmungen der Vorderwand kann sich der Montagerahmen so erstrecken, dass seine Befestigungsbereiche aus dem Montagegehäuse austreten können. Dabei wird die Beweglichkeit des Montagerahmens durch die Dimensionierung der Ausnehmungen begrenzt, durch die er sich erstreckt.

Wie bereits oben erwähnt, können zur Befestigung der Frontverkleidung an dem Montagerahmen rückwärtig an der Frontverkleidung vorspringende Bolzen vorgesehen sein, welche mit entsprechenden Bohrungen an dem Montagerahmen zusammenwirken. Beispielsweise können solche Bolzen durch in den erwähnten Befestigungsbereichen des Montagerahmens vorgesehene Bohrungen gesteckt werden. Die Frontverkleidung kann somit einfach auf das Montagegehäuse mit dem darin montierten Montagerahmen aufgesteckt werden. Vorzugsweise sind dabei die Bohrungen innenseitig mit einem Einsatz aus einem elastischen oder gummiartigen Material ausgekleidet. Bei passender Wahl des Bohrungsdurchmessers und des Durchmessers der Bolzen können letztere so in die Bohrungen eingepresst werden, dass ein spielfreier Sitz des Montagerahmens in Bezug auf die Frontverkleidung und somit auch eine Fixierung des Laufwerkes in Bezug auf die Frontverkleidung in der gewünschten Position erreicht wird.

Im Folgenden soll die Erfindung nun anhand eines bevorzugten Ausführungsbeispiels unter Bezugnahme auf die beigefügten Figuren näher beschrieben werden. Dabei zeigen die Figuren im Einzelnen:
- Fig. 1: eine perspektivische Ansicht eines Montagegehäuses;
- Fig. 2: eine perspektivische Ansicht eines dazugehörigen Montagerahmens;
- Fig. 3: eine perspektivische Ansicht des Montagegehäuses aus der Fig. 1 mit dem darin montierten Montagerahmen aus der Fig. 2;
- Fig. 4: den in der Fig. 3 mit dem Rahmen IV bezeichneten Ausschnitt aus der Fig. 3 in vergrößertem Maßstab;
- Fig. 5: den in der Fig. 3 mit dem Rahmen V bezeichneten Ausschnitt aus der Fig. 3 in vergrößertem Maßstab;
- Fig. 6: einen Schnitt entlang der Linie VI-VI aus Fig. 5 in vergrößertem Maßstab;
- Fig. 7: eine perspektivische Ansicht der Anordnung aus Fig. 3 mit einer montierten Vorderwand; und
- Fig. 8: eine perspektivische Ansicht der Anordnung aus Fig. 7 mit einem darin montiertem Laufwerk und eine dazugehörige Frontverkleidung.

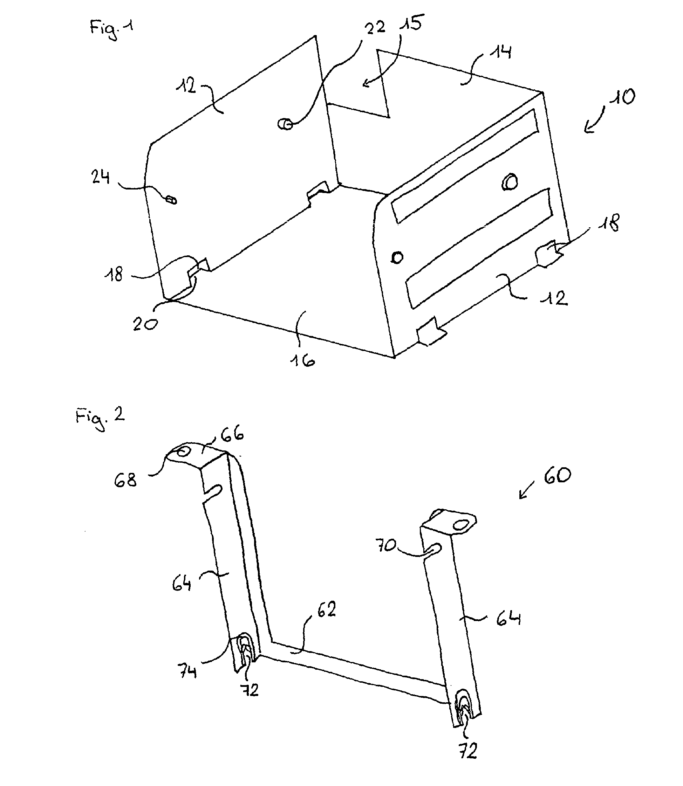

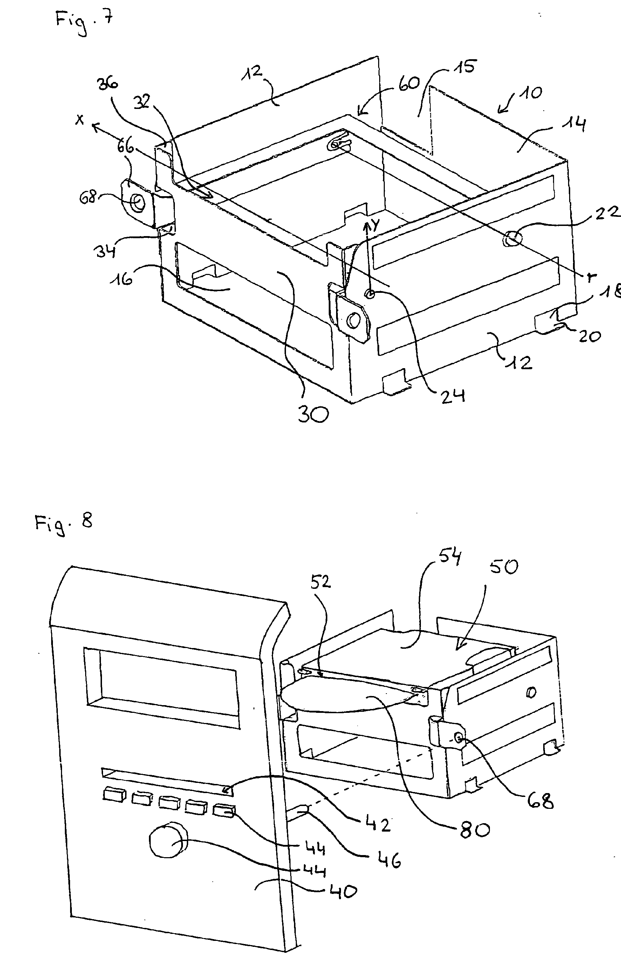

Fig. 1 zeigt eine perspektivische Ansicht eines Montagegehäuses 10 noch ohne eine später zu montierende Vorderwand 30 (Fig. 7). Man erkennt, dass das Montagegehäuse insgesamt im Wesentlichen die Form eines quaderförmigen Kastens besitzt. Die in Fig. 1 in Richtung des Betrachters liegende Vorderseite des Montagegehäuses 10 ist ebenso offen wie die in Fig. 1 oben liegende Oberseite. Eine im Wesentlichen quadratische Bodenplatte 16 bildet die Grundfläche des Montagegehäuses 10. Zwei sich einander gegenüberliegende, spiegelsymmetrisch zueinander ausgebildete Seitenwände 12 und eine Rückwand 14 gleicher Höhe verlaufen jeweils senkrecht zu der quadratischen Bodenplatte 16. Sowohl die Bodenplatte 16 als auch die Seitenwände 12 und die Rückwand 14 sind aus Metall ausgebildet, wobei die beiden Seitenwände 12 und die Rückwand oder alle Teile aus einem Stück hergestellt sein können.

An den beiden Seitenwänden 12 sind unten jeweils zwei identische rechteckige Aussparungen 18 ausgebildet, durch die an der Bodenplatte 16 ausgebildete, ebenfalls rechteckige Befestigungselemente 20 zur Befestigung der Seitenwände 12 an der Bodenplatte 16 verlaufen.

In der in der Fig. 1 links oben liegenden Ecke der Rückwand 14 ist eine in etwa quadratische Aussparung 15 ausgebildet, durch welche Anschlusskabel geführt werden können.

An den beiden Seitenwänden 12 sind jeweils zwei Lagerzapfen 22, 24 ausgebildet, welche zur beweglichen Lagerung eines Montagerahmens 60 dienen, wie später erläutert werden wird. Die Lagerzapfen 22, 24 liegen von der Bodenplatte 16 aus gesehen alle auf gleicher Höhe. Alle vier Zapfen besitzen eine im Wesentlichen zylindrische Form und sind in die jeweilige Seitenwand 12 eingestanzt oder eingesetzt. Der Durchmesser der näher in Richtung der Rückwand 14 liegenden hinteren Zapfen 22 ist größer als der Durchmesser der nahe der Vorderseite des Montagegehäuses 10 liegenden Zapfen 24.

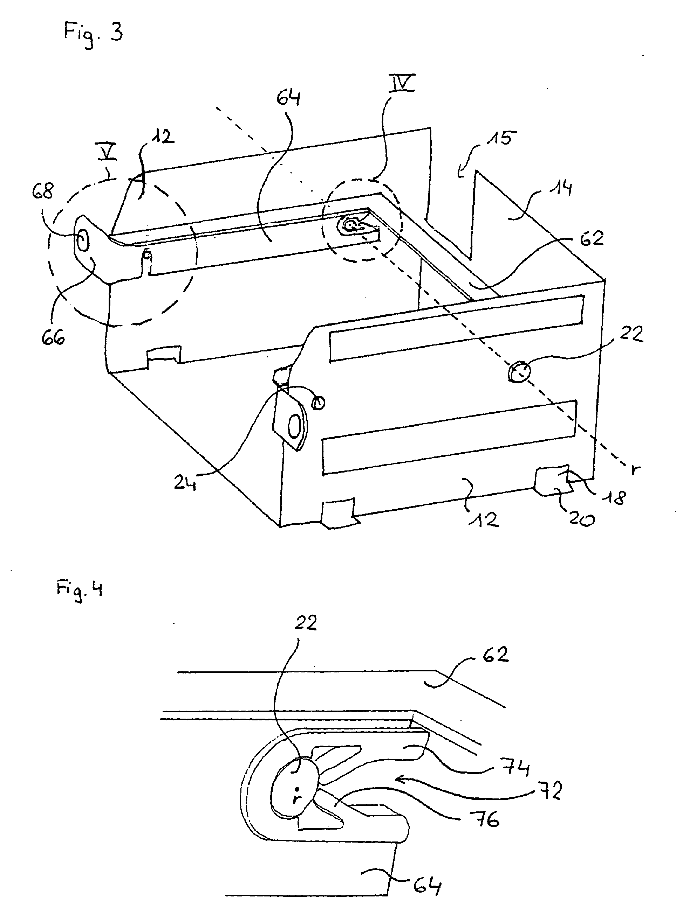

In Fig. 2 ist der bereits erwähnte in dem in Fig. 1 dargestellten Montagegehäuse 10 zu montierende Montagerahmen 60 alleine dargestellt. Kernstück des Montagerahmens 60 ist eine U-förmige Tragfläche 62, die sich, wie man in Fig. 3 sieht, bei in dem Montagegehäuse 10 montiertem Montagerahmen 60 im Wesentlichen parallel zu der Bodenplatte 16 erstreckt und jeweils entlang der beiden Seitenwände 12 und der Rückwand 14 verläuft. An den beiden Schenkeln des von der Tragfläche 62 gebildeten U sind zur Montage des Montagerahmens 60 an dem Montagegehäuse 10 jeweils senkrecht zu der Tragfläche 62 verlaufende Seitenflächen 64 vorgesehen, welche bei montiertem Montagerahmen 60 an den Seitenwänden 12 des Montagegehäuses 10 anliegen. Die Seitenflächen 64 gehen jeweils an den offenen Enden des U in rechtwinklig nach außen weisende Befestigungsbereiche 66 über, deren Breite um ein Vielfaches geringer ist als die Länge der Schenkel des U. In diesen Befestigungsbereichen 66 sind jeweils Bohrungen 68 ausgebildet, welche zur Befestigung einer Frontverkleidung 40 an dem Montagerahmen 60 dienen und später genauer beschreiben werden sollen. Wie man in Fig. 3 sieht, verlaufen die Seitenflächen 64 des Montagerahmens 60 entlang der Seitenwand 12 des Montagegehäuses 10 bis zu deren Vorderkanten, an denen sich dann die bereits erwähnten Befestigungsbereiche 66 an die Seitenflächen 64 anschließen und somit außenseitig über das Montagegehäuse 10 vorstehen. Die Tragfläche 62, die sich nach Art eines Simses entlang der Seitenwände 12 und der Rückwand 14 erstreckt, dient zum Auflegen und gegebenenfalls auch zum Befestigen eines Laufwerkes 50, wie aus der Fig. 8 ersichtlich ist. Der gesamte Montagerahmen 60 besteht mit Ausnahme von weiter unten zu erläuternden Kunststoffeinsätzen aus Metall.

In den beiden Seitenflächen 64 des Montagerahmens 60 sind jeweils zwei Lagerausnehmungen 70 und 72 ausgebildet, welche mit den Lagerzapfen 24, 22 an den Seitenwänden 12 des Montagegehäuses 10 zusammenwirken und im Folgenden näher beschrieben werden sollen.

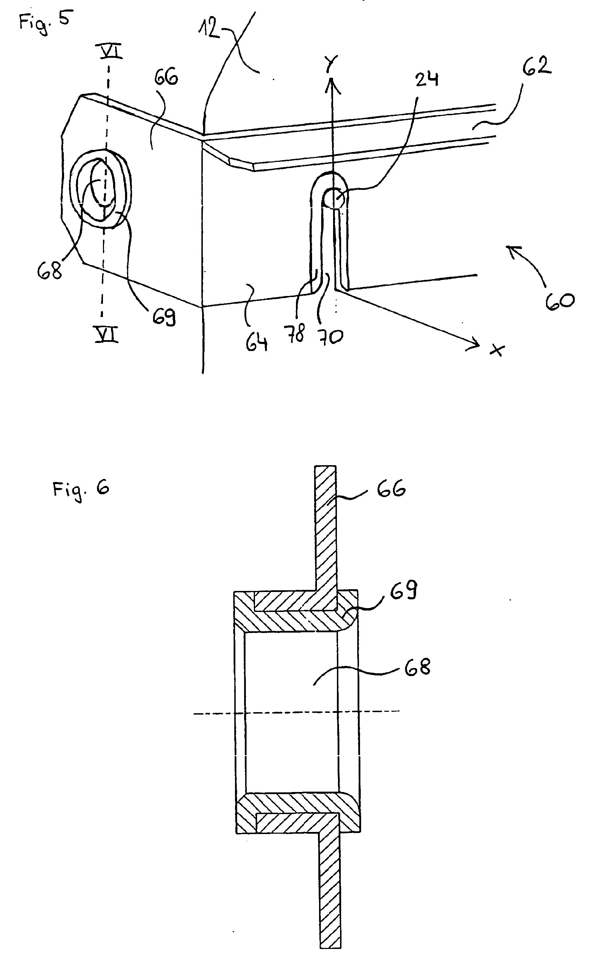

Die in einem vorderen Bereich der Seitenflächen 64 ausgebildeten Lagerausnehmungen 70, welche am besten in dem in Fig. 5 dargestellten Ausschnitt zu erkennen sind, besitzen im Wesentlichen die Form eines langgestreckten U, wobei die Öffnung des U bei montiertem Montagerahmen 60 in Richtung der Bodenplatte 16 des Montagegehäuses 10 zeigt. Die Lagerausnehmungen 70 erstrecken sich somit in eine Richtung y (vgl. Fig. 5), welche quer zu der Erstreckungsrichtung x (vgl. Fig. 5 und 7) des Schlitzes 52 in dem Laufwerk 50 und des Schlitzes 42 in der Frontverkleidung 40 (vgl. Fig. 8) verläuft. Wie man ebenfalls in Fig. 5 erkennt, ist die Lagerausnehmung 70 in der aus Metall bestehenden Seitenfläche 64 des Montagerahmens 60 mit einem passenden Dämpfungseinsatz 78 aus z.B. Gummi versehen, der von innen in die Ausnehmung 70 eingesetzt ist und diese gewissermaßen von innen auskleidet. Die verbleibende Breite der Ausnehmung 70 entspricht in etwa dem Durchmesser des an der Seitenwand 12 des Montagegehäuses 10 sitzenden Lagerzapfens 24.

Die rückwärtig an den Seitenflächen 64 ausgebildeten Lagerausnehmungen 72 sind am besten in dem in Fig. 4 dargestellten Ausschnitt zu sehen und sind ebenfalls U-förmig. Allerdings erstrecken sich die Lagerausnehmungen 72 senkrecht zu den Lagerausnehmungen 70, und die Öffnung des U zeigt bei an dem Montagegehäuse montiertem Montagerahmen 60 in Richtung der Rückwand 14. Im Vergleich zur Form der Lagerausnehmungen 70 sind die Lagerausnehmungen 72 weniger langgestreckt und stattdessen breiter. In den rückwärtigen Lagerausnehmungen 72 ist jeweils ein Drehlagereinsatz 74 eingesetzt, der im Gegensatz zu den Dämpfungseinsätzen 78 in den Lagerausnehmungen 70 aber nicht lediglich U-förmig ist. Vielmehr weist er zum einen an der der Öffnung des U gegenüberliegenden Seite der Lagerausnehmung 72 eine halbkreisförmige Ausnehmung auf, deren Durchmesser dem Durchmesser des Zapfens 22 entspricht, und besitzt zudem zwei elastische Finger 76, die bei montiertem Montagerahmen 60 den Zapfen 22 in Position halten. Dadurch wird verhindert, dass die Seitenfläche 64 des Montagerahmens in Bezug auf den Lagerzapfen 22 verschoben wird. Stattdessen ermöglicht der Drehlagereinsatz 74 nur eine Drehung des Montagerahmens 60 um die durch die Lagerzapfen 22 verlaufende Drehachse r.

Bei der Montage des Montagerahmens 60 an dem Montagegehäuse 10 wird der Montagerahmen 60 zunächst in der in Fig. 2 dargestellten vertikalen Lage zwischen den beiden Seitenwänden 12 in das Montagegehäuse 10 eingeführt. Die beiden rückwärtig an den Seitenflächen 64 des Montagerahmens 60 ausgebildeten Lagerausnehmungen 72 werden auf die Lagerzapfen 22 aufgesteckt. Dabei werden die beiden elastischen Finger 76 des Drehlagereinsatzes 74 nach außen gedrückt, so dass der Lagerzapfen 22 die in Fig. 4 dargestellte Position einnehmen kann. Wenn der Lagerzapfen 22 nun korrekt positioniert in der Lagerausnehmung 72 sitzt und von den elastischen Fingern 76 in dem Drehlagereinsatz 74 gehalten wird, kann in einem nächsten Schritt der gesamte Montagerahmen 60 um die in den Fig. 3 und 4 dargestellte Drehachse r um etwa 90° gedreht werden. Dabei werden dann die beiden langgestreckten Lagerausnehmungen 70 auf die vorderen Lagerzapfen 24 aufgeschoben, bis sich der Montagerahmen 60 schließlich in der in Fig. 3 dargestellten Position befindet.

Der Montagerahmen 60 ist nun an dem Montagegehäuse 10 gelagert und kann an seiner Rückseite nach wie vor um die Achse r verschwenkt werden, wobei er sich dann vorne gleichzeitig nach oben und unten entlang der vertikalen Achse y (vgl. Fig. 5) verschieben lässt.

Die Montage des Montagegehäuses 10 wird nach dem Anbringen des Montagerahmens 60 durch die Montage einer Vorderwand 30 vervollständigt. Die an dem Montagegehäuse 10 montierte Vorderwand ist in der Fig. 7 zu erkennen und man sieht, dass ihre über alles gesehene Kontur im Wesentlichen der der Rückwand 14 entspricht. Seitlich sind an der Vorderwand 30 jeweils nach hinten weisende Montageflächen 36 angeformt, welche bei an dem Montagegehäuse 10 befestigter Vorderwand 30 an den Seitenwänden 12 des Montagegehäuses 10 anliegen. Die Vorderwand 30 weist oben eine Ausnehmung 32 zum Einführen eines Datenträgers in das Laufwerk 50 auf und besitzt zudem seitliche Ausnehmungen 34, durch die bei montierter Vorderwand 30 der Montagerahmen 60 verläuft, so dass seine Befestigungsbereiche 66 sowohl vorne als auch außenseitig über das Montagegehäuse 10 hinausragen. Durch die Maße der Ausnehmungen 34 wird die Verschiebbarkeit des Montagerahmens 60 beschränkt und insbesondere wird verhindert, dass der Montagerahmen 60 so weit nach oben verschwenkt wird, dass die vorderen Lagerstellen 70 von den Lagerzapfen 24 geschoben werden. Die vertikale Erstreckung der Ausnehmungen 34 wird im Allgemeinen nur einige Millimeter größer sein als die vertikale Erstreckung des Montagerahmens 60, so dass der mögliche Verschiebeweg in vertikale Richtung ebenfalls einige Millimeter beträgt, was im Allgemeinen ausreicht, um eine korrekte Ausrichtung des Laufwerkes 50 in Bezug auf die Frontverkleidung 40 zu erreichen. Die Vorderwand 30 besitzt zudem in einem unteren Bereich noch eine weitere Ausnehmung, die beispielsweise für eine Kontaktherstellung mit Bedienelementen 44 an der Frontverkleidung 40 genutzt werden kann.

Nach Montage der Anordnung bestehend aus dem Montagerahmen 60, dem Montagegehäuse 10 und der Vorderwand 30 wird das Laufwerk 50 auf dem beweglich gelagerten Montagerahmen 60 montiert. Wie in Fig. 8 zu erkennen ist, besitzt das Laufwerk 50 ein quaderförmiges Gehäuse 54, dessen Grundfläche unwesentlich kleiner als die Fläche der Bodenplatte 16 ist, so dass das Laufwerk 50 auf die Tragfläche 62 des Montagerahmens 60 aufgelegt und dann dort montiert werden kann. An der Vorderseite des Laufwerkes 50 ist ein Schlitz 52 zum Einführen eines Datenträgers 80, beispielsweise einer CD, ausgebildet. Wenn der Montagerahmen 60 relativ zu dem Montagegehäuse 10 bewegt wird, bewegt sich das gesamte Laufwerk 50 mit ihm, so dass die Lage des Schlitzes 52 verändert werden kann. Der Schlitz 52 kann sowohl seitlich verkippt als auch nach oben oder unten verschoben werden.

Das Montagegehäuse 10 mit montiertem Laufwerk 50 und nicht dargestellter oberen Abdeckung kann nun in einem nicht dargestellten Armaturenbrett montiert werden, indem es beispielsweise von hinten verschraubt wird.

Die in Fig. 8 noch nicht montiert dargestellte Frontverkleidung 40 wird in einem letzten Montageschritt von vorne auf das Montagegehäuse 10 so aufgesetzt, dass rückwärtig an der Frontverkleidung 40 angeordnete Bolzen 46 durch die in den Befestigungsbereichen 66 ausgebildeten Bohrungen 68 gesteckt werden. Die mit Bedienelementen 44 für das Einbaugerät und einem Schlitz 42 zum Einführen eines Datenträgers in das Laufwerk 50 versehene Frontverkleidung 40 kann auch integraler Bestandteil einer Instrumententafel sein.

Die weiter oben bereits erwähnten Bohrungen 68 in den Befestigungsbereichen 66 sind in Fig. 5 in perspektivischer Ansicht und in Fig. 6 im Querschnitt jeweils in vergrößertem Maßstab dargestellt. Man erkennt, dass sie mit einem im Wesentlichen ringförmigen Dämpfungseinsatz 69 versehen sind, der sowohl zur Absorption von Schwingungen als auch zum Halt des Bolzens 46 dient und aus einem Hartgummi oder einem anderen Kunststoff mit ähnlichen Materialeigenschaften ausgebildet ist. Der Dämpfungseinsatz 69 ragt sowohl vorne als auch hinten wulstartig über die Bohrung 68 hinaus und ist dadurch in dieser verklemmt. Bei geeigneter Wahl des Durchmessers des Bolzens 46 und der Bohrung 68 mit ihrem Dämpfungseinsatz 69 kann ein fester Presssitz des Bolzens 46 in der Bohrung 68 erreicht werden, so dass kein Spiel mehr zwischen dem fest an dem Montagerahmen 60 montierten Laufwerk 50 und der Frontverkleidung 40 bestehen kann. Bei der Montage der Frontverkleidung 40 an dem Montagerahmen 60 kann die Position des Montagerahmens 60 in Bezug auf das Montagegehäuse 10 noch verändert werden, bis der Schlitz 52 des Laufwerks 50 mit dem Schlitz 42 in der Frontverkleidung 40 korrekt ausgerichtet ist.

### Bezugszeichenliste

- 10: Montagegehäuse
- 12: Seitenwand des Montagegehäuses 10
- 14: Rückwand des Montagegehäuses 10
- 15: Ausnehmung in Rückwand 14
- 16: Bodenplatte des Montagegehäuses 10
- 18: Aussparungen in Seitenwänden 12
- 20: Befestigungselemente
- 22: Lagerzapfen
- 24: Lagerzapfen
- 30: Vorderwand
- 32: Ausnehmung zum Einführen eines Datenträgers
- 34: seitliche Ausnehmung
- 36: Montageflächen

- 40: Frontverkleidung
- 42: Schlitz in Frontverkleidung 40
- 44: Bedienelemente
- 46: Bolzen

- 50: Laufwerk
- 52: Schlitz zum Einführen eines Datenträgers
- 54: Gehäuse des Laufwerks

- 60: Montagerahmen
- 62: Tragfläche
- 64: Seitenfläche
- 66: Befestigungsbereich

- 68: Bohrung in 66
- 69: Dämpfungseinsatz für 68
- 70: Lagerausnehmung
- 72: Lagerausnehmung Drehlager
- 74: Drehlagereinsatz
- 76: elastischer Finger
- 78: Dämpfungseinsatz für 70
- 80: Datenträger

- x: Erstreckungsrichtung Schlitz
- y: Verschieberichtung
- r: Drehachse

## Patentansprüche

1. Montageanordnung zur Montage eines Einbaugerätes in einem Kraftfahrzeug **gekennzeichnet durch** einen beweglich in einem Montagegehäuse (10) gelagerten Montagerahmen (60), an dem ein Laufwerk (50) des Einbaugerätes befestigbar ist, und einer Frontverkleidung (40) mit einem Schlitz (42) zum Einführen eines Datenträgers (80) in das Laufwerk (50), wobei die Position des Montagerahmens (60) in dem Montagegehäuse (10) **durch** eine Befestigung des Montagerahmens (60) an der Frontverkleidung (40) fixierbar ist.

2. Montageanordnung nach Anspruch 1,
**dadurch gekennzeichnet,**
**dass** der Montagerahmen (60) im Wesentlichen U-förmig ist, wobei die offene Seite des Montagerahmens (60) in Richtung der Frontverkleidung (40) orientiert ist, und die Außenkontur des Montagerahmens (60) der Innenkontur des Montagegehäuses (10) entspricht.

3. Montageanordnung nach Anspruch 1 oder 2,
**dadurch gekennzeichnet,**
**dass** der Montagerahmen (60) in dem Montagegehäuse (10) an seiner in Richtung der Frontverkleidung (40) liegenden Vorderseite so gelagert ist, dass er in eine Richtung quer zu der Erstreckungsrichtung (x) des Schlitzes (42) verschoben werden kann.

4. Montageanordnung nach Anspruch 3,
**dadurch gekennzeichnet,**
**dass** der Montagerahmen (60) an seiner der Vorderseite gegenüberliegenden Rückseite um eine Drehachse (r) verschwenkbar gelagert ist, die parallel zu der Erstreckungsrichtung (x) des Schlitzes (42) verläuft.

5. Montageanordnung nach einem der vorstehenden Ansprüche,
**dadurch gekennzeichnet,**
**dass** eine verschwenkbare Lagerung des Montagerahmens (60) an dem Montagegehäuse (10) mittels zweier rückwärtig an dem Montagerahmen (60) vorgesehener Lagerausnehmungen (72) realisiert ist, welche auf zwei korrespondierende in dem Montagegehäuse (10) innenseitig vorspringende Lagerzapfen (22) aufschiebbar sind.

6. Montageanordnung nach einem der vorstehenden Ansprüche,
**dadurch gekennzeichnet,**
**dass** der Montagerahmen (60) schwingungsgedämpft an dem Montagegehäuse (10) gelagert ist, insbesondere über Lagerausnehmungen (70, 72), die Dämpfungseinsätze (74, 78) aufweisen.

7. Montageanordnung nach einem der vorstehenden Ansprüche,
**dadurch gekennzeichnet,**
**dass** der Montagerahmen (60) an seiner in Richtung der Frontverkleidung (40) liegenden Vorderseite außenseitig über das Montagegehäuse (10) überstehende Befestigungsbereiche (66) zu seiner Befestigung an der Frontverkleidung (40) aufweist.

8. Montageanordnung nach Anspruch 7,
**dadurch gekennzeichnet,**
**dass** die Befestigungsbereiche (66) jeweils eine Bohrung (68) für ein Befestigungselement (46) aufweisen, wobei die Bohrungen (68) insbesondere jeweils mit einem Dämpfungseinsatz (69) versehen sind.

9. Montageanordnung nach einem der Ansprüche 7 oder 8,
**dadurch gekennzeichnet,**
**dass** das Montagegehäuse (10) eine Vorderwand (30) aufweist, welche einerseits eine Aussparung (32) zum Einführen eines Datenträgers (80) in das Laufwerk (50) besitzt und andererseits seitliche Aussparungen (34) besitzt, durch welche sich der Montagerahmen (60) erstreckt.

10. Montageanordnung nach einem der vorstehenden Ansprüche,
**dadurch gekennzeichnet,**
**dass** die Frontverkleidung (40) in Richtung des Montagegehäuses (10) vorstehende Bolzen (46) aufweist, welche mit Bohrungen (68) an dem Montagerahmen (60) zusammenwirken.

11. Verfahren zur Montage eines Einbaugerätes in einem Kraftfahrzeug **gekennzeichnet durch** die folgende Montageschritten:
- Montage eines Montagerahmens (60) in einem Montagegehäuse (10), wobei der Montagerahmen (60) beweglich an dem Montagegehäuse (10) gelagert wird,
- Fixierung eines Laufwerkes (50) des Einbaugerätes an dem Montagerahmen (60),
- Montage einer mit einem Schlitz (42) zum Einführen eines Datenträgers (80) versehenen Frontverkleidung (40) an dem Montagege-häuse (10), wobei der Montagerahmen (60) an der Frontverkleidung (40) befestigt und **dadurch** fixiert wird.

12. Verfahren zur Montage eines Einbaugerätes in einem Kraftfahrzeug nach Anspruch 11,
**dadurch gekennzeichnet,**
**dass** es nach dem Schritt der Montage des Montagerahmens (60) in dem Montagegehäuse (10) zusätzlich den Schritt der Montage einer Vorderwand (30) an dem Montagegehäuse (10) umfasst.

13. Verfahren zur Montage eines Einbaugerätes in einem Kraftfahrzeug nach Anspruch 11 oder 12,
**dadurch gekennzeichnet,**
**dass** an der Frontverkleidung (40) vorgesehene, rückwärtig vorstehende Bolzen (46) in Bohrungen (68) gesteckt werden, die an außenseitig über das Montagegehäuse (10) überstehenden Befestigungsbereichen (66) des Montagerahmens (60) ausgebildet sind.

## Claims

1. An installation arrangement for the installation of a built-in device in a motor vehicle **characterized by** an installation frame (60), which is movably supported in an installation housing (10) and to which a drive (50) of the built-in device can be fastened, and by a front panel (40) with a slot (42) for the introduction of a data carrier (80) into the drive (50), wherein the position of the installation frame (60) in the installation housing (10) can be fixed by a fastening of the installation frame (60) to the front panel (40).

2. An installation arrangement in accordance with claim 1, **characterized in that** the installation frame (60) is substantially U shaped, with the open side of the installation frame (60) being oriented in the direction of the front panel (40) and the outer contour of the installation frame (60) corresponding to the inner contour of the installation housing (10).

3. An installation arrangement in accordance with claim 1 or claim 2, **characterized in that** the installation frame (60) in the installation housing (10) is supported at its front side disposed in the direction of the front panel (40) such that it can be displaced in a direction transverse to the direction of extent (x) of the slot (42).

4. An installation arrangement in accordance with claim 3, **characterized in that** the installation frame (60) is pivotably supported at its rear side disposed opposite to its front side about an axis of rotation (r) which extends parallel to the direction of extent (x) of the slot (42).

5. An installation arrangement in accordance with any one of the preceding claims, **characterized in that** a pivotable support of the installation frame (60) at the installation housing (10) is realized by means of two support notches (72) provided rearwardly at the installation frame (60) and pushable onto two corresponding support spigots (22) projecting at the inner side in the installation housing (10).

6. An installation arrangement in accordance with any one of the preceding claims, **characterized in that** the installation frame (60) is supported in a vibration-damped manner at the installation housing (10), in particular via support notches (70, 72) having damping inserts (74, 78).

7. An installation arrangement in accordance with any one of the preceding claims, **characterized in that** the installation frame (60) has fastening regions (66) projecting beyond the installation housing (10) at the outer side at its front side disposed in the direction of the front panel (40) for its fastening to the front panel (40).

8. An installation arrangement in accordance with claim 7, **characterized in that** the fastening regions (66) each have a bore (68) for a fastening element (46), with the bores (68) in particular each being provided with a damping insert (69).

9. An installation arrangement in accordance with any one of the claims 7 or 8, **characterized in that** the installation housing (10) has a front wall (30) which, on the one hand, has a cut-out (32) for the introduction of a data carrier (80) into the drive (50) and, on the other hand, has lateral cut-outs (34) through which the installation frame (60) extends.

10. An installation arrangement in accordance with any one of the preceding claims, **characterized in that** the front panel (40) has bolts (46) which project in the direction of the installation housing (10) and which cooperate with bores (68) at the installation frame (60).

11. A method of installing a built-in device in a motor vehicle **characterized by** the following installation steps:
- installation of an installation frame (60) in an installation housing (10), with the installation frame (60) being movably supported at the installation housing (10);
- fixing a drive (50) of the built-in device to the installation frame (60);
- installation of a front panel (40) provided with a slot (42) for the introduction of a data carrier (80) to the installation housing (10), with the installation frame (60) being fastened to the front panel (40) and thereby being fixed.

12. A method of installing a built-in device in a motor vehicle in accordance with claim 11, **characterized in that** it additionally includes the step of installing a front wall (30) to the installation housing (10) after the step of the installation of the installation frame (60) in the installation housing (10).

13. A method of installing a built-in device in a motor vehicle in accordance with claim 11 or claim 12, **characterized in that** bolts (46) provided at the front panel (40) and projecting rearwardly are plugged into bores (68) which are formed at fastening regions (66) of the installation frame (60) projecting beyond the installation housing (10) at the outer side.

## Revendications

1. Dispositif de montage pour le montage d'un appareil intégré dans un véhicule automobile, **caractérisé par** un cadre de montage (60) monté mobile dans un boîtier de montage (10), sur lequel peut être fixé un lecteur (50) de l'appareil intégré, et par un habillage frontal (40) avec une fente (42) pour introduire un support de données (80) dans le lecteur (50), la position du cadre de montage (60) dans le boîtier de montage (10) pouvant être fixée par une fixation du cadre de montage (60) sur l'habillage frontal (40).

2. Dispositif de montage selon la revendication 1,
**caractérisé**
**en ce que** le cadre de montage (60) est sensiblement en forme de U, le côté ouvert du cadre de montage (60) étant orienté en direction de l'habillage frontal (40), et le contour extérieur du cadre de montage (60) correspondant au contour intérieur du boîtier de montage (10).

3. Dispositif de montage selon la revendication 1 ou 2,
**caractérisé**
**en ce que** le cadre de montage (60) est monté dans le boîtier de montage (10), sur sa face avant située en direction de l'habillage frontal (40), de manière à pouvoir être poussé dans une direction transversale à la direction d'étendue (x) de la fente (42).

4. Dispositif de montage selon la revendication 3,
**caractérisé**
**en ce que** le cadre de montage (60) est monté pivotant autour d'un axe de rotation (r), sur sa face arrière située face à la face avant, lequel axe de rotation s'étend parallèlement à la direction d'étendue (x) de la fente (42).

5. Dispositif de montage selon l'une quelconque des revendications précédentes,
**caractérisé**
**en ce qu'**un montage pivotant du cadre de montage (60) est réalisé sur le boîtier de montage (10) au moyen de deux évidements de palier (72) prévus à l'arrière sur le cadre de montage (60), lesquels évidements peuvent être enfilés sur deux tourillons (22) correspondants, faisant saillie sur le côté intérieur, dans le boîtier de montage (10).

6. Dispositif de montage selon l'une quelconque des revendications précédentes,
**caractérisé**
**en ce que** le cadre de montage (60) est monté sur le boîtier de montage (10) de manière à amortir les oscillations, en particulier par l'intermédiaire d'évidements de palier (70, 72) qui comportent des inserts d'amortissement (74, 78).

7. Dispositif de montage selon l'une quelconque des revendications précédentes,
**caractérisé**
**en ce que** le cadre de montage (60) présente, sur sa face avant située en direction de l'habillage frontal (40), des zones de fixation (66) dépassant du boîtier de montage (10) sur le côté extérieur, pour sa fixation sur l'habillage frontal (40).

8. Dispositif de montage selon la revendication 7,
**caractérisé**
**en ce que** les zones de fixation (66) présentent chacune un alésage (68) pour un élément de fixation (46), les alésages (68) étant pourvus en particulier chacun d'un insert d'amortissement (69).

9. Dispositif de montage selon l'une quelconque des revendications 7 ou 8,
**caractérisé**
**en ce que** le boîtier de montage (10) présente une paroi avant (30) qui possède d'une part une découpe (32) pour introduire un support de données (80) dans le lecteur (50), et d'autre part des découpes latérales (34) à travers lesquelles s'étend le cadre de montage (60).

10. Dispositif de montage selon l'une quelconque des revendications précédentes,
**caractérisé**
**en ce que** l'habillage frontal (40) présente des boulons (46) faisant saillie en direction du boîtier de montage (10), qui coopèrent avec des alésages (68) sur le cadre de montage (60).

11. Procédé de montage d'un appareil intégré dans un véhicule automobile, **caractérisé par** les étapes de montage suivantes :
- montage d'un cadre de montage (60) dans un boîtier de montage (10), le cadre de montage (60) étant monté mobile sur le boîtier de montage (10),
- fixation d'un lecteur (50) de l'appareil intégré sur le cadre de montage (60),
- montage d'un habillage frontal (40) pourvu d'une fente (42) pour introduire un support de données (80), sur le boîtier de montage (10), le cadre de montage (60) étant fixé à l'habillage frontal (40) et étant de ce fait fixé.

12. Procédé de montage d'un appareil intégré dans un véhicule automobile selon la revendication 11,
**caractérisé**
**en ce qu'**il comprend, après l'étape de montage du cadre de montage (60) dans le boîtier de montage (10), l'étape supplémentaire du montage d'une paroi avant (30) sur le boîtier de montage (10).

13. Procédé de montage d'un appareil intégré dans un véhicule automobile selon la revendication 11 ou 12,
**caractérisé**
**en ce que** des boulons (46) faisant saillie vers l'arrière et prévus sur l'habillage frontal (40), sont enfoncés dans des alésages (68) qui sont réalisés dans des zones de fixation (66) du cadre de montage (60), dépassant côté extérieur du boîtier de montage (10).
